(19) Europäisches Patentamt
European Patent Office
Office européen des brevets

(11) **EP 1 850 039 A1**

## (12) EUROPEAN PATENT APPLICATION
published in accordance with Art. 158(3) EPC

(43) Date of publication:
**31.10.2007 Bulletin 2007/44**

(51) Int Cl.:
*F16J 15/10* (2006.01)

(21) Application number: **06713271.2**

(22) Date of filing: **08.02.2006**

(86) International application number:
**PCT/JP2006/302128**

(87) International publication number:
**WO 2006/087948 (24.08.2006 Gazette 2006/34)**

(84) Designated Contracting States:
**DE FR GB**

(30) Priority: **18.02.2005 JP 2005041517**
**27.09.2005 JP 2005279498**
**11.10.2005 JP 2005296085**
**18.11.2005 JP 2005333632**

(71) Applicant: **NOK Corporation**
**Minato-ku**
**Tokyo 105-8585 (JP)**

(72) Inventors:
• **ISONO, Eiji**
**sawa-shi, Kanagawa, 2510042 (JP)**

• **TAJIRI, Katsuya**
**sawa-shi, Kanagawa, 2510042 (JP)**
• **SHINTAKU, Nobuyuki**
**sawa-shi, Kanagawa, 2510042 (JP)**
• **YAMADA, Shuzo**
**sawa-shi, Kanagawa, 2510042 (JP)**
• **MIYAKE, Kuniaki**
**sawa-shi, Kanagawa, 2510042 (JP)**
• **INOUE, Mitsuaki**
**sawa-shi, Kanagawa, 2510042 (JP)**

(74) Representative: **TBK-Patent**
**Bavariaring 4-6**
**80336 München (DE)**

## (54) SEALING STRUCTURE USING GASKET

(57) A sealing structure sealing a clearance between a base (1) having a storage part (11) and a cover (2) joined to the base (1) so as to close the storage part (11) through a gasket (4) formed of a rubber-like elastic material. The base (1) and the cover (2) comprise side peripheral surfaces (12a) and (22a) opposed to each other in a direction different from a joining direction with a screw member (3). The gasket (4) is integrally fitted onto the side peripheral surface (12a) of the base (1) (or the side peripheral surface (22a) of the cover (2)), and the seal surface (41a) of the gasket is closely fitted to the side peripheral surface (22a) of the cover (2) (or the side peripheral surface (12a) of the base (1)). Thus, the outer shell of a device formed of the base (1) and the cover (2) can be easily thinned and the cover (2) can be prevented from being nonuniformly deformed by the repulsion of the gasket (4) .

**FIG. 1**

EP 1 850 039 A1

## Description

## BACKGROUND OF THE INVENTION

## Field of the Invention

The present invention relates to a sealing structure for sealing between a base having a storage part and a cover attached to the base to close the storage part via a gasket made of a rubber-like elastic material, for example, a structure for sealing between a base and a cover as required in a hard disc drive apparatus (hereinafter, referred to as HDD).

## Description of the Conventional Art

In an HDD, it is necessary to prevent dust or water, which is impeditive for writing and reading a data to a magnetic disc, from entering from an external part as much as possible. Accordingly, a gasket is interposed between the base, in which the magnetic disc, a head for reading and writing the data, a drive apparatus thereof and the like are stored, and the cover for sealing the base.

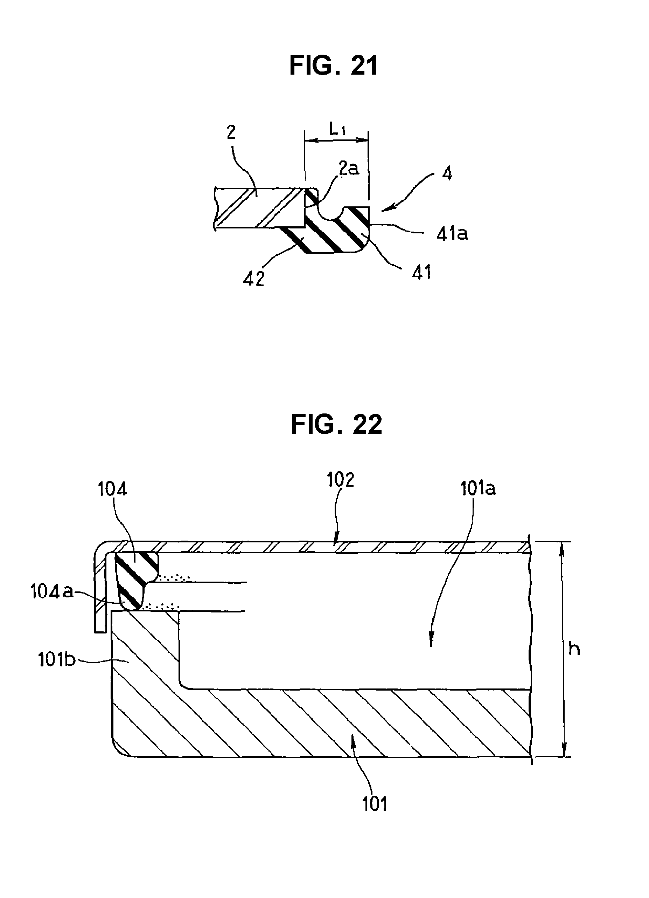

Fig. 22 is a partly cross sectional view showing a conventional art of a sealing structure by the gasket. In this Fig. 22, reference numeral 101 denotes a base in an HDD, and reference numeral 102 denotes a cover. The base 101 is structured such that a storage part 101a, in which a magnetic disc, a magnetic head, a drive apparatus thereof (not shown) and the like are stored, is surrounded by a side plate part 101b. Further, the cover 102 is manufactured by press molding of a metal plate, for example, a stainless steel, an aluminum or the like, and an endless-shaped gasket 104 made of a rubber-like elastic material is integrally formed on an outer peripheral part of an inner surface thereof. The gasket 104 has a seal lip 104a brought into close contact with an upper surface of the side plate part 101b of the base 101 (refer, for example, to the drawing of patent document 1). Patent Document 1: Japanese Unexamined Patent Publication No. 2004-36630

However, in accordance with the conventional sealing structure such as the patent document 1 mentioned above, since the gasket 104 is brought into close contact with the upper surface of the side plate part 101b of the base 101, a thickness (a height h) of an outer shell of the apparatus consisting of the base 101 and the cover 102 is enlarged, and it is hard to fulfill the demands for thinness of the apparatus.

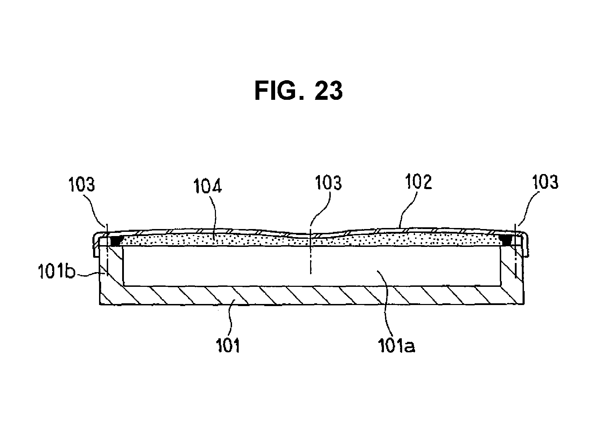

Fig. 23 is a cross sectional view rhetorically showing a condition that a deflection of the cover 102 is generated in the conventional art. In particular, as shown in Fig. 23, since an outer peripheral part of the cover 102 is attached to an upper surface of the side plate part 101b of the base 101 by being joined with a plurality of screw members 103, the cover 102 is outward deformed undulately at positions between the joined parts with the screw members 103 on the basis of repulsion force of the gasket 104 which is compressed between the side plate part 101b of the base 101 and the cover 102. Accordingly, a surface pressure of the gasket 104 with respect to the upper surface of the side plate part 101b of the base 101 becomes uneven and the surface pressure necessary for sealing tends to be insufficient at positions between the joined parts with the screw members 103.

## SUMMARY OF THE INVENTION

The present invention is made by taking the points mentioned above into consideration, and a technical problem thereof is to prevent an uneven deformation of a cover caused by repulsion force of a gasket and a partial surface pressure lack of the gasket caused thereby, as well as to facilitate thin formation of an outer shell of an apparatus consisting of a base and a cover.

## Means for Solving the Problem

As a means for effectively solving the technical problem mentioned above, in accordance with a first aspect of the present invention, there is provided a sealing structure using a gasket for sealing a clearance between a base having a storage part and a cover joined to the base so as to close the storage part, via a gasket made of a rubber-like elastic material, wherein the base and the cover have side peripheral surfaces facing to each other in a different direction from their joining direction, and the gasket is integrally provided on one side peripheral surface of the side peripheral surface of the base and the side peripheral surface of the cover, and is brought into close contact with the other side peripheral surface.

In other words, in the structure mentioned above, when the gasket is integrally provided on the side peripheral surface of the base for example, a seal surface of the gasket is brought into close contact with the side peripheral surface of the cover, and on the other hand, when the gasket is integrally provided on the side peripheral surface of the cover, a seal surface of the gasket is brought into close contact with the side peripheral surface of the base.

Further, in accordance with a second aspect of the present invention, there is provided a sealing structure using a gasket as recited in the first aspect, wherein the gasket has a seal lip brought into close contact with the other side peripheral surface, and the seal lip is formed in an inclined state toward a relative movement direction of the other side peripheral surface at a time of relatively moving the cover to the storage part side of the base.

In accordance with this structure, in the process of relatively moving the cover to the storage part side of the base (in a direction of moving the base and the cover close to each other), the seal lip of the gasket is deformed so as to be further largely inclined on the basis of a slide motion with respect to the other side peripheral surface, and thereby a surface pressure of the seal surface is reduced. On the contrary, in the process of relative movement of the cover to an opposite side to the storage part of the base (in a direction of opening the base and the cover from each other), the seal lip is deformed in an uprising direction on the basis of a friction with the other side peripheral surface, and the surface pressure of the seal surface is increased, whereby a breakaway resistance is increased.

Further, in accordance with a third aspect of the present invention, there is provided a sealing structure using a gasket as recited in the first aspect, wherein the other side peripheral surface has a larger fastening margin with respect to the gasket at an outer side from a close fitting part to the gasket.

In accordance with this structure, if the base and the cover are relatively moved in the direction of opening the base and the cover from each other from the state in which the side peripheral surfaces of the base and the cover are fitted to each other via the gasket, the breakaway resistance is increased in the gasket provided on one of the side peripheral surfaces of the base and the cover due to an increase of the surface pressure with respect to the other side peripheral surface.

Further, in accordance with a fourth aspect of the present invention, there is provided a sealing structure using a gasket as recited in the first aspect, wherein the fastening margin with respect to the gasket is made gradually larger from an end part of the other side peripheral surface toward the close fitting part with the gasket, on the other side peripheral surface.

In accordance with this structure, since a collapsing margin with respect to the gasket is gradually increased in the process of fitting the cover to the base, assembling can be done easily, and a sufficient collapsing margin can be provided to the gasket.

Further, in accordance with a fifth aspect of the present invention, there is provided a sealing structure using a gasket as recited in the first aspect, wherein the base and the cover have side plate parts along the outer peripheries thereof, and the gasket is adhered in such a manner as to enwrap one of the side plate parts.

In accordance with this structure, since the gasket is provided in such a manner as to enwrap one of the side plate parts, an adhesion area is increased.

Further, in accordance with a sixth aspect of the present invention, there is provided a sealing structure using a gasket as recited in the first aspect, wherein the base and the cover have side plate parts along the outer peripheries thereof, the gasket is adhered to one of the side plate parts, and has an extension part extending toward a side to which a leading end of the one side plate part is directed, and the seal lip brought into close contact with the other side peripheral surface is formed on the extension part.

In accordance with this structure, since the seal lip is formed on the extension part of the gasket extended from one side peripheral surface toward the side to which the leading end is directed, stress of the seal lip caused by the close contact with the other side peripheral surface is absorbed by a bending deformation of the extension part, so that the gasket becomes softer, and deforming force applied to the base and the cover is reduced.

Further, in accordance with a seventh aspect of the present invention, there is provided a sealing structure using a gasket for sealing a clearance between a base having a storage part and a cover joined to the base so as to close the storage part, via a gasket made of a rubber-like elastic material, wherein the base and the cover have side peripheral surfaces facing to each other in a different direction from their joining direction, and the gasket is integrally provided on the side peripheral surface of the base and is brought into close contact with the side peripheral surface of the cover, and a buffering part positioned at an outer peripheral part of a bottom plate part of the cover is integrally formed in the gasket.

In accordance with this structure, the buffering part formed so as to extend from the gasket serves a function of reducing an impact from an exterior part.

Further, in accordance with an eighth aspect of the present invention, there is provided a sealing structure using a gasket for sealing a clearance between a base having a storage part and a cover joined to the base so as to close the storage part, via a gasket made of a rubber-like elastic material, wherein the gasket is constituted by a base part integrally adhered to a side peripheral surface of the cover, and a seal lip extending to an outer peripheral side of the base part in such a manner that an opposite side to the storage part forms a concave shape, and the seal lip is brought into close contact in a buckling state with a side plate part of the base extending in such a manner as to surround the side peripheral surface of the cover.

In accordance with this structure, since the seal lip is brought into close contact with the side plate part of the base in a buckling state, stress of the seal lip is absorbed by the buckling. As a result, the gasket becomes softer, and deforming force applied to the base and the cover is reduced. Further, since the seal lip extends in such a manner that the opposite side to the storage part in the base forms the concave shape, and thereby buckling occurs in such a manner that the seal lip collapses toward an opposite side to the storage part of the base, the seal lip is deformed in an uprising direction on the basis of the friction with the other side peripheral surface, in the process of relative movement of the cover toward the opposite side to the storage part of the base (in the direction of opening the base and the cover from each other), and the surface pressure of the seal surface is increased. Therefore, the breakaway resistance is increased.

Further, in accordance with a ninth aspect of the present invention, there is provided a sealing structure using a gasket as recited in the eighth aspect, wherein one or both of the following two expressions is satisfied:

$$S_A \geqq S_B \quad \ldots (1)$$

$$H > W(2) \quad \ldots (2)$$

In the above expressions, $S_A$ is a cross sectional area of a clearance between the base part of the gasket and the side plate part of the base, $S_B$ is a cross sectional area of the seal lip, H is a height from a bottom part of the concave shape of the seal lip to an upper surface of the cover, and W is a protruding width of the seal lip from the base part of the gasket to an outer peripheral side.

In accordance with this structure, it is possible to prevent the seal lip pinched between the side plate part of the base and the base part of the gasket from protruding to an outer side from the clearance between the base part of the gasket and the side plate part of the base.

Further, in accordance with a tenth aspect of the present invention, there is provided a sealing structure using a gasket for sealing a clearance between a base having a storage part and having a polygonal plane projection shape with rounded corner parts, and a cover arranged at an inner side of a side plate part of the base and joined so as to close the storage part, via a gasket made of a rubber-like elastic material, integrally bonded to a side peripheral surface of the cover and brought into close contact with an inner side surface of the side plate part, wherein a radius of curvature of an outer peripheral seal surface of the gasket at the corner parts is made smaller than a radius of curvature of an inner side surface of the side plate part of the base at the corner parts.

Further, in accordance with an eleventh aspect of the present invention, there is provided a sealing structure using a gasket for sealing a clearance between a base having a storage part and having a polygonal plane projection shape with rounded corner parts, and a cover arranged at an inner side of a side plate part of the base and joined so as to close the storage part, via a gasket made of a rubber-like elastic material, integrally bonded to a side peripheral surface of the cover and brought into close contact with an inner side surface of the side plate part, wherein a protruding length of the gasket at the corner parts is made larger than a protruding length of the gasket at the other parts than the corner part.

## Effect of the Invention

In accordance with the sealing structure using the gasket on the basis of the first aspect of the present invention, since the gasket is interposed between the side peripheral surfaces facing to each other in the different direction from the direction of joining the base and the cover by a joining means such as screws or the like, it is possible to present the uneven deformation of the cover caused by the repulsion force of the gasket, and the unevenness of the surface pressure of the gasket caused thereby, and it is possible to provide the sealing structure having a high reliability.

In accordance with the sealing structure using the gasket on the basis of the second aspect of the present invention, since the seal lip of the gasket is deformed so as to reduce the surface pressure at a time of moving the base and the cover close to each other, it is possible to easily assemble the base and the cover. On the contrary, the seal lip of the gasket increases the surface pressure with respect to the direction of opening the base and the cover from each other, and restoring force of the seal lip is applied to the direction of moving the base and the cover close to each other, in addition to the effect obtained by the first aspect. Accordingly, since the gasket itself has the joining force between the base and the cover, it is possible to reduce dependency on the joining means such as the screws or the like so as to reduce its cost.

In accordance with the sealing structure using the gasket on the basis of the third aspect of the present invention, it is possible to reduce dependency on the joining means such as the screws or the like, similarly to the second aspect, on the basis of the increase of the breakaway resistance, whereby the cost can be reduced.

In accordance with the sealing structure using the gasket on the basis of the fourth aspect of the present invention, the sufficient collapsing margin can be provided to the gasket and assembling can be done easily.

In accordance with the sealing structure using the gasket on the basis of the fifth aspect of the present invention, a desired adhesion strength of the gasket can be secured even in the case that the gasket itself is inevitably downsized in accordance with the downsizing of the base and the cover, in addition to the effect obtained by the first aspect.

In accordance with the sealing structure using the gasket on the basis of the sixth aspect of the present invention, since the gasket becomes softer and the deforming force applied to the base and the cover is reduced, it is possible to effectively suppress the deformation of the base and the cover, which are downsized and thinned on the basis of the downsizing of the device so as to have lowered rigidity, in addition to the effect obtained by the first aspect.

In accordance with the sealing structure using the gasket on the basis of the seventh aspect of the present invention, since the buffering part is formed in the gasket so as to extend, an independent buffering member is not necessary to be provided, and since the adhesion area of the gasket to the base is increased by the buffering part, an adhesion strength can be enhanced.

In accordance with the sealing structure using the gasket on the basis of the eighth aspect of the present invention, since the gasket becomes softer, and the deforming force applied to the base and the cover is reduced, it is possible to effectively suppress the deformation of the base and the cover, which is downsized and thinned on the basis of the downsizing of the device so as to have reduced rigidity. Further, it is possible to reduce dependency on the joining means such as the screws or the like, similarly to the second aspect, on the basis of the increase of the breakaway resistance, thereby it is possible to reduce the cost.

In accordance with the sealing structure using the gasket on the basis of the ninth aspect of the present invention, it is possible to effectively prevent the seal lip from protruding to the outer side from the clearance between the base and the cover, in addition to the effect obtained by the eighth aspect. Further, this matter is effective in the light of making the apparatus thin by reducing the dimension in the thickness direction.

In accordance with the sealing structure using the gasket on the basis of the tenth aspect or the eleventh aspect of the present invention, since the collapsing amount of the gasket at the corner part can be made larger than the collapsing amount of the gasket at the other parts than the corner part in the structure in which the plane projection shapes of the base and the gasket are formed in the polygonal shape having the rounded corner parts, it is possible to secure a desired sealing performance in the corner part of the base, where high dimensional precision is hardly attained.

## BRIEF EXPLANATION OF THE DRAWINGS

Fig. 1 is a partly cross sectional view showing a first embodiment of a sealing structure using a gasket in accordance with the present invention;
Fig. 2 is a partly cross sectional view showing an example in which a shape of the gasket in accordance with the first embodiment is modified;
Fig. 3 is a partly cross sectional view showing a second embodiment of a sealing structure using a gasket in accordance with the present invention;
Fig. 4 is a partly cross sectional view showing an example in which a shape of the gasket in accordance with the second embodiment is modified;
Fig. 5 is a partly cross sectional view showing a third embodiment of a sealing structure using a gasket in accordance with the present invention;
Fig. 6 is a partly cross sectional view showing an example in which a shape of the gasket in accordance with the third embodiment is modified;
Fig. 7 is a view as seen in an arrow direction VII in Fig. 1;
Fig. 8 is a view showing an example without the corner parts in Fig. 7;
Fig. 9 is a partly cross sectional view showing a fourth embodiment of a sealing structure using a gasket in accordance with the present invention;
Fig. 10 is a partly cross sectional view showing an example in which shapes of the gasket and the cover in accordance with the fourth embodiment are modified;
Fig. 11 is a partly cross sectional view showing an example in which a shape of the base in accordance with the fourth embodiment is modified;
Fig. 12 is a partly cross sectional view showing a fifth embodiment of a sealing structure using a gasket in accordance with the present invention;
Fig. 13 is a partly cross sectional view showing a sixth embodiment of a sealing structure using a gasket in accordance with the present invention;
Fig. 14 is a partly cross sectional view showing a seventh embodiment of a sealing structure using a gasket in accordance with the present invention, in a state that a base and a cover are not fitted;
Fig. 15 is a partly cross sectional view showing the seventh aspect in a state that the base and the cover are fitted;
Fig. 16 is a partly cross sectional view showing a compared aspect with the seventh aspect;
Fig. 17 is a partly cross sectional view showing an example in which a shape of the cover in accordance with the seventh aspect is modified, in a state that the base and the cover are not fitted;
Fig. 18 is a partly cross sectional view showing the example in which the shape of the cover in accordance with the seventh aspect is modified, in a state that the base and the cover are fitted;
Fig. 19 is a plan view showing corner parts of the base, the cover and the gasket, in the sealing structure using the gasket in accordance with the present invention;
Fig. 20 is a cross sectional view obtained by cutting the gasket at a position XX-XX in Fig. 19;
Fig. 21 is a cross sectional view obtained by cutting the gasket at a position XXI-XXI in Fig. 19;
Fig. 22 is a cross sectional view showing a conventional art of a sealing structure using a gasket; and
Fig. 23 is a cross sectional view showing a state that a deflection of a cover is generated in the conventional art of the sealing structure using the gasket rhetorically.

## Description of Reference Numerals

| 1 | base |
|---|---|
| 11 | storage part |
| 12, 22 | side peripheral surface |
| 12a, 22b | inner side surface |
| 12b, 22a | outer side surface |
| 12c, 22c | leading end part |
| 121 | opening end part |
| 122 | step part |
| 2 | cover |
| 2a | outer peripheral edge |

| 21 | top plate part |
|---|---|
| 3 | screw member |
| 4 | gasket |
| 41 | seal lip |
| 41a | seal surface |
| 41b | groove |
| 42 | base part |
| 43 | extension part |
| 44 | buffering part |
| 5 | magnetic disc |
| A | corner part |
| B | straight part (other parts than corner part A) |
| G | facing gap |

## DETAILED DESCRIPTION OF PREFERRED EMBODIMENT

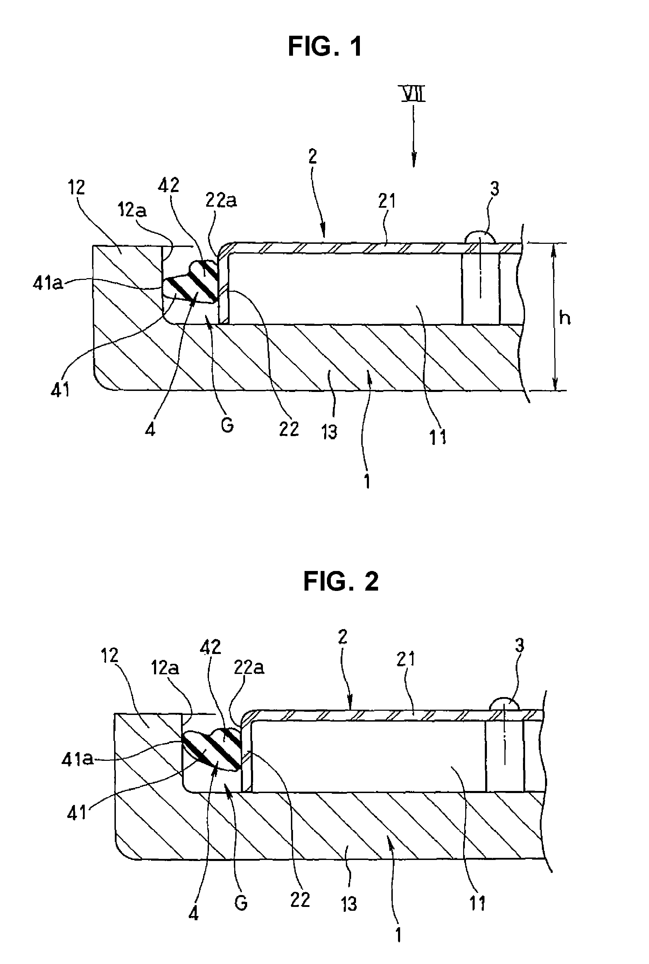

Fig. 1 is a partly cross sectional view showing a first embodiment of a sealing structure using a gasket in accordance with the present invention. In this Fig. 1, reference numeral 1 denotes a base constituted by a bottom plate part 13, and a side plate part 12 rising from an outer peripheral edge thereof, and having a storage part 11 in which a magnetic disc, a magnetic head and a driving apparatus thereof which are not illustrated, are stored, and reference numeral 2 denotes a cover connected via a plurality of screw members 3 so as to close the storage part 11 in the base 1. An outer shell case of an HDD is constituted by the base 1 and the cover 2.

The cover 2 is manufactured, for example, by a press molding of a metal plate such as a stainless steel, an aluminum or the like, and is constituted by a top plate part 21, and a side plate part 22 which is formed to bend approximately vertically along an outer peripheral edge thereof. Further, the cover 2 is inside fitted to the storage part 11 of the base 1. In other words, the side plate part 22 of the cover 2 is placed at an inner peripheral side of the side plate part 12 of the base 1, and an outer side surface 22a of the side plate part 22 of the cover 2 and an inner side surface 12a of the side plate part 12 of the base 1 face to each other with a predetermined facing gap G in a direction which is approximately perpendicular to a connecting direction (a vertical direction in Fig. 1) of the base 1 and the cover 2 by the screw members 3.

A gasket 4 made of a rubber-like elastic material is interposed in the facing gap G between the side plate part 22 of the cover 2 and the side plate part 12 of the base 1, and is integrally provided on the outer side surface 22a of the side plate part 22 of the cover 2. The gasket 4 can be, for example, vulcanized and formed integrally on the side plate part 22 of the cover 2 in accordance with an injection molding by using a metal mold or the like, or can be integrally formed in accordance with a method of extruding a liquid elastomer on the side plate part 22 into an endless shape by using a dispenser provided with a discharge nozzle, and bridging and hardening the liquid elastomer by irradiation of ultraviolet light or the like.

The gasket 4 has a seal lip 41 directed to an outer peripheral side, and is integrally bonded to the outer side surface 22a of the side plate part 22 of the cover 2 at a base part 42 which is thicker than the seal lip 41. Further, a seal surface 41a of a leading end (an outer peripheral end) of the seal lip 41 is brought into close contact with the inner side surface 12a of the side plate part 12 of the base 1 with a desired surface pressure, in a connected state of the base 1 and the cover 2. In this embodiment, the outer side surface 22a of the side plate part 22 of the cover 2 corresponds to "one side peripheral surface" in the description of the first aspect of the present invention, and the inner side surface 12a of the side plate part 12 of the base 1 corresponds to "other side peripheral surface" in the same description.

In accordance with the first embodiment mentioned above, since the gasket 4 is interposed between the inner side surface 12a of the side plate part 12 of the base 1 and the outer side surface 22a of the side plate part 22 of the cover 2, it is possible to reduce a thickness (a height h) of the outer shell of the apparatus constituted by the base 1 and the cover 2 accordingly, in comparison with the case that the gasket 104 is interposed in series with respect to the connecting direction of the base 101 and the cover 102 as shown in Fig. 22 described above, and it is possible to easily comply with a demand for reduction in thickness of the apparatus.

Further, a collapsing margin of the gasket 4 is caused by a difference between a facing distance of the outer side surface 22a of the side plate part 22 of the cover 2 with respect to the inner side surface 12a of the side plate part 12 of the base 1, and a dimension of the gasket 4 at a time of formation in the facing direction, and is not affected by a connecting position, a fastening amount or the like by the screw members 3. This is because the gasket 4 is compressed between the side plate parts 12 and 22 facing in the direction which is approximately perpendicular to the connecting direction of the base 1 and the cover 2 by the screw members 3. Therefore, a deflection caused by the fastening position and the fastening amount of the screw member 3 and repulsion force of the gasket 4 is not generated in the cover 2. Therefore, a surface pressure of the seal surface 41a with respect to the inner side surface 12a of the side plate part 12 of the base 1 does not become uneven. As a result, it is possible to prevent a sealing performance from being lowered by a partial lack of the surface pressure.

Fig. 2 is a partly cross sectional view showing an example in which a shape of the gasket 4 is modified in the first embodiment mentioned above. In the gasket 4 shown in Fig. 2, a seal lip 41 directed to an outer peripheral side extends so as to be inclined to an upper side. In other words, the seal lip 41 is formed into a state of being inclined toward an upper side corresponding to a relative movement direction of the inner side surface 12a of the side plate part 12 corresponding to "other side peripheral surface" at a time of relatively moving the cover 2 to the storage part 11 side (in a direction of moving the bottom plate part 13 of the base 1 and the top plate part 21 of the cover 2 close to each other).

In accordance with this structure, since the side plate part 12 of the base 1 is relatively moved to the upper side with respect to the gasket 4, at a time of inside fitting the cover 2 to the base 1, the seal lip 41 is deformed so as to incline to the upper side on the basis of a sliding motion with the inner side surface 12a of the side plate part 12, and the surface pressure of the seal surface 41a causing a resistance against the fitting is reduced. Further, since a compressing direction of the gasket 4 and the fitting direction of the base 1 and the cover 2 are different, it is possible to easily assemble the base 1 and the cover 2.

Further, on the contrary, in the case of relatively moving the cover 2 to an opposite side to the storage part 11 of the base 1 (in a direction of opening the bottom plate part 13 of the base 1 and the top plate part 21 of the cover 2 up and down mutually), the side plate part 12 of the base 1 relatively moves to the lower side with respect to the gasket 4. Therefore, the seal lip 41 is deformed so as to reduce an angle of incline on the basis of the sliding motion with the inner side surface 12a of the side plate part 12, and the surface pressure of the seal surface 41a is increased. Further, since restoring force of the seal lip 41 in the direction of incline acts in a direction of moving the bottom plate part 13 of the base 1 and the side plate part 22 of the cover 2 close to each other, the gasket 4 itself generates connecting force between the base 1 and the cover 2. Therefore, it is possible to reduce a degree at which the connection between the base 1 and the cover 2 depends on the screw member 3, specifically reduce the number of the screw members 3, thereby reducing a parts cost and a work cost at a time of assembling.

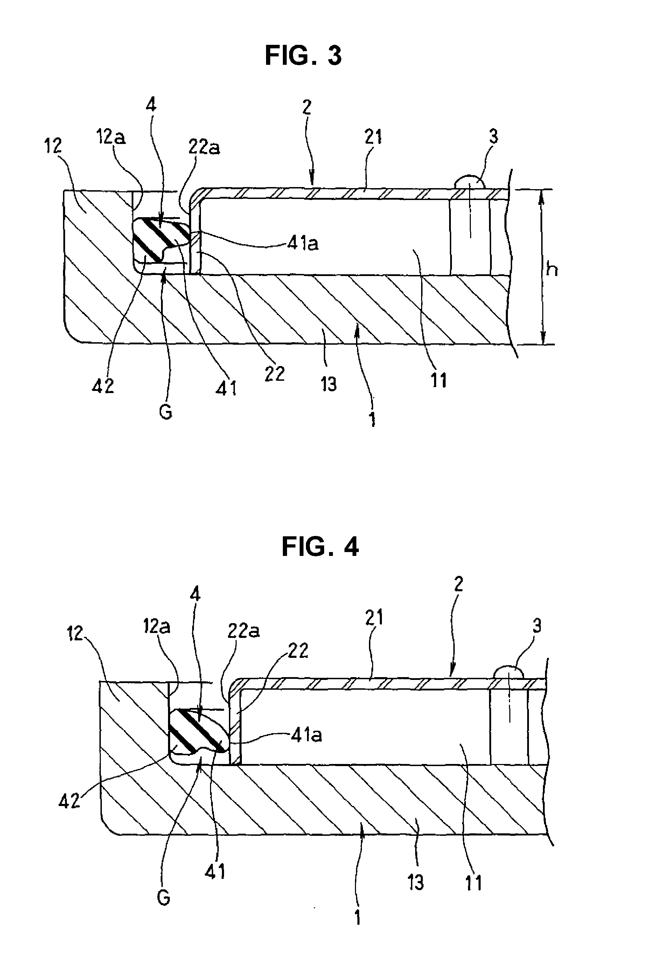

Next, Fig. 3 is a partly cross sectional view showing a second embodiment of the sealing structure using the gasket in accordance with the present invention. In this second embodiment, the base 1 and the cover 2 are the same as those of the first embodiment. In other words, the cover 2 is inside fitted to the storage part 11 of the base 1, and the outer side surface 22a of the side plate part 22 of the cover 2 and the inner side surface 12a of the side plate part 12 of the base 1 face to each other with the predetermined facing gap G in the direction which is approximately perpendicular to the connecting direction (a vertical direction in Fig. 3) of the base 1 and the cover 2 by the screw members 3.

The gasket 4 made of the rubber-like elastic material is interposed in the facing gap G between the side plate part 22 of the cover 2 and the side plate part 12 of the base 1, and is integrally provided on the inner side surface 12a of the side plate part 12 of the base 1. The gasket 4 can be, for example, vulcanized and formed integrally on the side plate part 12 of the base 1 in accordance with the injection molding using the metal mold or the like, or can be integrally formed in accordance with the method of extruding the liquid elastomer on the side plate part 12 into an endless shape by using the dispenser provided with the discharge nozzle, and bridging and hardening the liquid elastomer by irradiation of ultraviolet light or the like.

The gasket 4 has the seal lip 41 directed to the inner peripheral side, and is integrally bonded to the inner side surface 12a of the side plate part 12 of the base 1 at the base part 42 which is thicker than the seal lip 41. Further, the seal surface 41a of the leading end (an inner peripheral end) of the seal lip 41 is brought into close contact with the outer side surface 22a of the side plate part 22 of the cover 2 with a desired surface pressure, in the connected state of the base 1 and the cover 2. In this embodiment, the inner side surface 12a of the side plate part 12 of the base 1 corresponds to "one side peripheral surface" in the description of the first aspect of the present invention, and the outer side surface 22a of the side plate part 22 of the cover 2 corresponds to "other side peripheral surface" in the same description.

In accordance with the second embodiment mentioned above, similarly to the first embodiment, since the gasket 4 is interposed between the inner side surface 12a of the side plate part 12 of the base 1 and the outer side surface 22a of the side plate part 22 of the cover 2, it is possible to reduce the thickness (the height h) of the outer shell of the apparatus constituted by the base 1 and the cover 2 accordingly, in comparison with the conventional art as shown in Fig. 22 described above, and it is possible to easily comply with a demand for reduction in thickness of the apparatus.

Further, since the gasket 4 is compressed between the side plate parts 12 and 22 facing in the direction which is approximately perpendicular to the connecting direction of the base 1 and the cover 2 by the screw members 3, the collapsing margin is not affected by the connecting position, the fastening amount or the like by the screw members 3. Therefore, since the surface pressure of the seal surface 41a with respect to the outer side surface 22a of the side plate part 22 of the cover 2 does not become uneven, it is possible to prevent the sealing performance from being lowered by the partial lack of the surface pressure.

Fig. 4 is a partly cross sectional view showing an example in which the shape of the gasket 4 is modified in the second embodiment mentioned above. In the gasket 4 shown in Fig. 4, the seal lip 41 directed to an inner peripheral side extends so as to be inclined to a lower side. In other words, the seal lip 41 is formed into a state of being inclined toward a lower side corresponding to the relative movement direction of the outer side surface 22a of the side plate part 22 corresponding to "other side peripheral surface" at a time of relatively moving the cover 2 to the storage part 11 side of the base 1.

In accordance with this structure, since the side plate part 22 of the cover 2 is relatively moved to the lower side with respect to the gasket 4, at a time of inside fitting the cover 2 to the base 1, the seal lip 41 is deformed so as to incline to the lower side on the basis of the sliding motion with the outer side surface 22a of the side plate part 22, and the surface pressure of the seal surface 41a causing resistance against the fitting is reduced. Further, since the compressing direction of the gasket 4 and the fitting direction of the base 1 and the cover 2 are different, it is possible to easily assemble the base 1 and the cover 2.

Further, on the contrary, in the case of relatively opening the base 1 and the cover 2 up and down from each other, the side plate part 22 of the cover 2 relatively moves to the upper side with respect to the gasket 4. Therefore, the seal lip 41 is risen and deformed so as to reduce the angle of incline on the basis of the sliding motion with the outer side surface 22a of the side plate part 22, and the surface pressure of the seal surface 41a is increased. Further, since the restoring force of the seal lip 41 in the direction of incline acts in the direction of moving the bottom plate part 13 of the base 1 and the side plate part 22 of the cover 2 close to each other, the gasket 4 itself generates the connecting force between the base 1 and the cover 2. Therefore, it is possible to reduce a degree at which the connection between the base 1 and the cover 2 depends on the screw member 3, specifically reduce the number of the screw members 3, thereby reducing the parts cost and the work cost at a time of assembling.

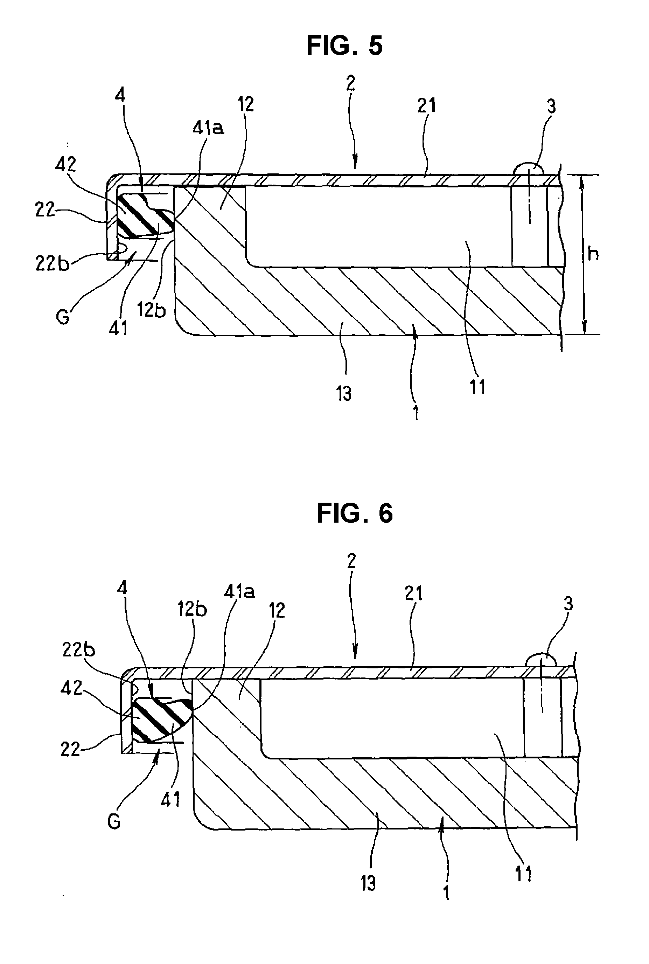

Next, Fig. 5 is a partly cross sectional view showing a third embodiment of the sealing structure using the gasket in accordance with the present invention. In this third embodiment, the cover 2 is outside fitted to the base 1 inversely to the first or second embodiment described above. In detail, the side plate part 22 of the cover 2 is placed at an outer peripheral side of the side plate part 12 of the base 1, and an inner side surface 22b of the side plate part 22 of the cover 2 and an outer side surface 12b of the side plate part 12 of the base 1 face to each other with the predetermined facing gap G in the direction which is approximately perpendicular to the connecting direction (a vertical direction in Fig. 5) of the base 1 and the cover 2 by the screw members 3.

The gasket 4 made of the rubber-like elastic material is interposed in the facing gap G between the side plate part 22 of the cover 2 and the side plate part 12 of the base 1, and is integrally provided on the inner side surface 22b of the side plate part 22 of the cover 2. The gasket 4 can be, for example, vulcanized and formed integrally on the side plate part 22 of the cover 2 in accordance with the injection molding using the metal mold or the like, or can be integrally formed in accordance with the method of extruding the liquid elastomer on the side plate part 22 into an endless shape by using the dispenser provided with the discharge nozzle, and bridging and hardening the liquid elastomer by irradiation of ultraviolet light or the like.

The gasket 4 has the seal lip 41 directed to the inner peripheral side, and is integrally bonded to the inner side surface 22b of the side plate part 22 of the cover 2 at the base part 42 which is thicker than the seal lip 41. Further, the seal surface 41a of the leading end (the inner peripheral end) of the seal lip 41 is brought into close contact with the outer side surface 12b of the side plate part 12 of the base 1 with a desired surface pressure, in the connected state of the base 1 and the cover 2. In this embodiment, the inner side surface 22b of the side plate part 22 of the cover 2 corresponds to "one side peripheral surface" in the description of the first aspect of the present invention, and the outer side surface 12b of the side plate part 12 of the base 1 corresponds to "other side peripheral surface" in the same description.

In accordance with the third embodiment mentioned above, since the gasket 4 is interposed between the side plate part 12 of the base 1 and the side plate part 22 of the cover 2, it is possible to reduce the thickness (the height h) of the outer shell of the apparatus constituted by the base 1 and the cover 2 accordingly, in comparison with the conventional art as in Fig. 22 described above, and it is possible to easily comply with a demand for reduction in thickness of the apparatus.

Further, since the gasket 4 is compressed between the side plate parts 12 and 22 facing in the direction which is approximately perpendicular to the connecting direction of the base 1 and the cover 2 by the screw members 3, the collapsing margin is not affected by the connecting position, the fastening amount or the like by the screw members 3. Therefore, since the surface pressure of the seal surface 41a with respect to the outer side surface 12b of the side plate part 12 of the base 1 does not become uneven, it is possible to prevent the sealing performance from being lowered by the partial lack of the surface pressure.

Fig. 6 is a partly cross sectional view showing an example in which the shape of the gasket 4 is modified in the third embodiment mentioned above. In the gasket 4 shown in Fig. 6, the seal lip 41 directed to an inner peripheral side extends so as to be inclined to an upper side. In other words, the seal lip 41 is formed into a state of being inclined toward an upper side corresponding to the relative movement direction of the outer side surface 12b of the side plate part 12 corresponding to "other side peripheral surface" at a time of relatively moving the cover 2 to the storage part 11 side of the base 1 (a direction of moving the bottom plate part 13 of the base 1 and the top plate part 21 of the cover 2 close to each other).

In accordance with this structure, since the side plate part 12 of the base 1 is relatively moved to the upper side with respect to the gasket 4, at a time of outside fitting the cover 2 to the base 1, the seal lip 41 is deformed so as to incline to the upper side on the basis of the sliding motion with the outer side surface 12b of the side plate part 12, and the surface pressure of the seal surface 41a causing resistance against the fitting is reduced. Further, since the compressing direction of the gasket 4 and the fitting direction of the base 1 and the cover 2 are different, it is possible to easily assemble the base 1 and the cover 2.

Further, on the contrary, in the case of relatively opening the base 1 and the cover 2 up and down from each other, the side plate part 12 of the base 1 relatively moves to the lower side with respect to the gasket 4. Therefore, the seal lip 41 is risen and deformed so as to reduce the angle of incline on the basis of the sliding motion with the outer side surface 12b of the side plate part 12, and the surface pressure of the seal surface 41a is increased. Further, since restoring force of the seal lip 41 in the direction of incline acts in the direction of moving the side plate part 12 of the base 1 and the top plate part 21 of the cover 2 close to each other, the gasket 4 itself generates connecting force between the base 1 and the cover 2. Therefore, it is possible to reduce a degree at which the connection between the base 1 and the cover 2 depends on the screw members 3, specifically reduce the number of the screw members 3, thereby reducing the parts cost and the work cost at a time of assembling.

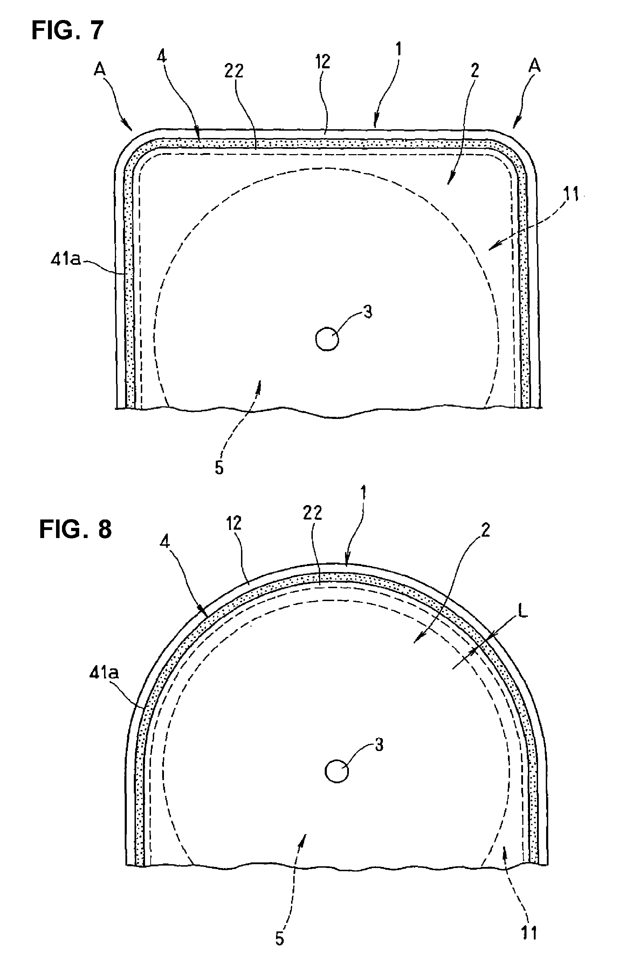

In this case, Fig. 7 is a view (a plan view) as seen in an arrow direction VII in Fig. 1. In each of the embodiments mentioned above, when the connection between the base 1 and the cover 2 by the screw member 3 is executed at one position at an axial center (corresponding to a part near the centers of the base 1 and the cover 2) of the magnetic disc 5 stored in the storage part 11, as shown in Fig. 7, it is possible to further effectively prevent a repetitive undulate deformation which has been conventionally generated in the cover 2.

Further, the base 1 and the cover 2 in an HDD are formed in a rectangular parallelepiped shape in an outer appearance, however, in each of the embodiments mentioned above, four corner parts A in a plan projection shape are formed in a round shape. In particular, as for each of the corner parts A mentioned above, it is possible to secure a sealing performance at each of the corner parts A by forming the seal surface 41a of the seal lip 41 of the gasket 4 and the side peripheral surface (the inner side surface 12a of the side plate part 12 of the base 1 in Fig. 7) brought into close contact with the seal surface 41a so as to extend in the round shape. Further, as for each of the round-shaped corner parts A in Fig. 7, a sealing performance of the gasket 4 extending along the corner parts is improved in accordance with an increase of a radius of curvature thereof.

Then, Fig. 8 shows an example of a shape obtained by eliminating the corner parts from the plan projection shape in Fig. 7, in the light of the enlargement of the radius of curvature of each of the round-shaped corner parts A, as mentioned above. In particular, in this example, a part of the side plate parts 12 and 22 of the base 1 and the cover 2 is formed in a semicircular arc shape which is concentric with the magnetic disc 5 stored in the storage part 11. This part may be formed in a partial oval shape. In accordance with the shape mentioned above, since it is possible to make a facing distance L between the side plate parts 12 and 22 approximately uniform at an entire circumference, it is possible to make the collapsing margin of the gasket 4, or in other words, the surface pressure of the seal surface 41a approximately uniform at an entire circumference, thereby securing a further excellent sealing performance.

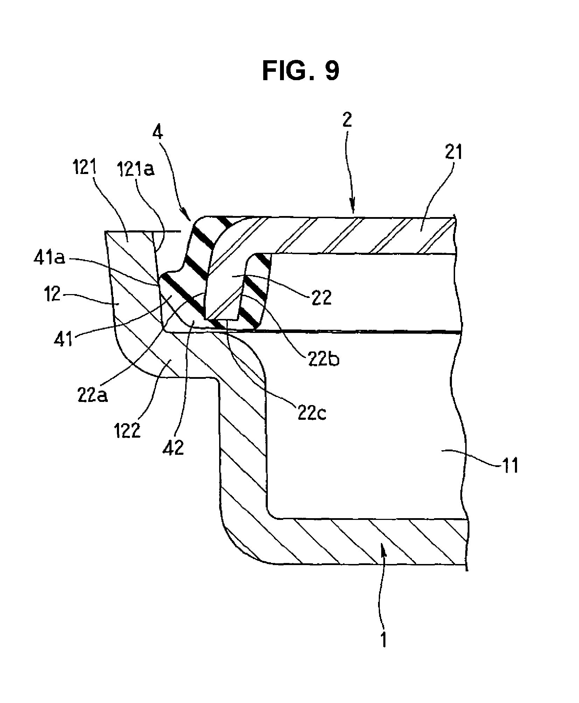

Fig. 9 is a partly cross sectional view showing a fourth embodiment of the sealing structure using the gasket in accordance with the present invention. In this embodiment, the cover 2 is inside fitted to the base 1, similarly to the first embodiment shown in Fig. 1 described above basically. In particular, the cover 2 is structured such that the side plate part 22 of the cover 2 is placed at the inner peripheral side of the side plate part 12 of the base 1, and the outer side surface 22a of the side plate part 22 of the cover 2 and the inner side surface of the side plate part 12 of the base 1 face to each other in the direction which is approximately perpendicular to the connecting direction (a vertical direction in Fig. 9) of the base 1 and the cover 2 by the screw members 3 as shown in Fig 1.

A step part 122 in which an upper part is expanded to an outer peripheral side is formed in the side plate part 12 of the base 1, and an opening end part 121 at an upper side of the step part 122 is inclined so as to be slightly open to an outer peripheral side. On the other hand, the side plate part 22 of the cover 2 is formed in an inclined shape which is open to an outer peripheral side, and a leading end part (a lower end part) 22c thereof faces to an upper surface of the step part 122 in the side plate part 12 of the base 1.

The gasket 4 made of the rubber-like elastic material is integrally provided on the side plate part 22 of the cover 2. The gasket 4 is, for example, vulcanized and formed integrally on the side plate part 22 of the cover 2 in accordance with the injection molding using the metal mold or the like, and has the seal lip 41 directed to the outer peripheral side, and the base part 42 thereof is adhered to the side plate part 22 of the cover 2 in such a manner as to enwrap the outer side surface 22a, the leading end part 22c and the inner side surface 22b.

The seal lip 41 of the gasket 4 is structured such that the seal surface 41a at the leading end (the outer peripheral end) is brought into close contact with the inner side surface 121a of the opening end part 121 in the side plate part 12 of the base 1 with a desired surface pressure, in the illustrated fitted state, and is formed in the state of being inclined toward the upper side corresponding to the relative movement direction of the side plate part 12 of the base 1 at a time of relatively moving the cover 2 to the storage part 11 side (in the direction of moving the bottom plate part 13 of the base 1 and the top plate part 21 of the cover 2 close to each other). In this embodiment, the outer side surface 22a of the side plate part 22 of the cover 2 corresponds to "one side peripheral surface" in the description of the first aspect of the present invention, and the inner side surface 121a of the side plate part 12 (the opening end part 121) of the base 1 corresponds to "other side peripheral surface" in the same description.

In accordance with the fourth embodiment mentioned above, it is basically possible to obtain the same effects as those of the first embodiment described above. In addition, in accordance with this embodiment, since the opening end part 121 in the side plate part 12 of the base 1 is inclined so as to be slightly open to the outer peripheral side, the collapsing margin with respect to the seal lip 41 of the gasket 4 is increased gradually in the process of inside fitting the cover 2 to the base 1. Accordingly, it is possible to easily assemble the base 1 and the cover 2, and it is possible to provide a sufficient collapsing margin to the seal lip 41 of the gasket 4.

Further, since the base part 42 of the gasket 4 is integrally formed in such a manner as to enwrap the side plate part 22 of the cover 2, an adhesion area is large. Accordingly, even in the case that the gasket 4 itself is inevitably downsized on the basis of a downsizing of the base 1 and the cover 2, a desired adhesion area of the gasket 4 can be secured. Further, since a metal contact between the step part 122 of the base 1 and the leading end part 22c of the side plate part 22 of the cover 2 is prevented, it is possible to prevent generation of particles giving an adverse influence to the magnetic disc.

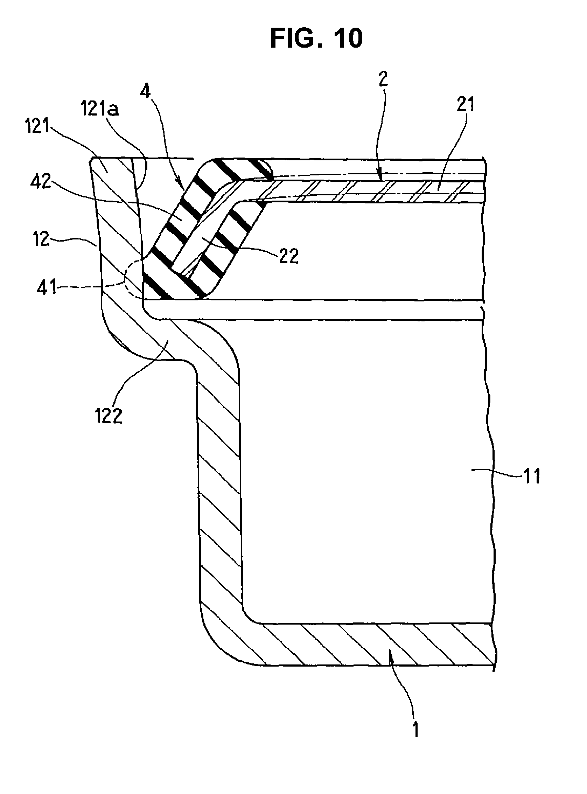

Fig. 10 is a partly cross sectional view showing an example in which the shapes of the gasket and the cover are modified in the fourth embodiment. The basic structure in Fig. 10 is the same as that in Fig. 9, however, the side plate part 22 of the cover 2 is formed in an inclined shape which is open to the outer peripheral side comparatively largely, and the top plate part 21 is structured so as to be readily bent by deforming force from an outer peripheral side as rhetorically shown by a single-dot chain line in the figure. Further, the opening end part 121 in the side plate part 12 of the base 1 rises up approximately vertically with respect to the step part 122 in the lower side, however, is inclined in a gentle rounded surface shape in such a manner that the inclination to the outer peripheral side increases toward the upper side.

In accordance with the structure in Fig. 10, when the side plate part 22 of the cover 2 is fitted to the inner periphery of the open end part 121 in the side plate part 12 of the base 1 via the gasket 4, the collapsing margin with respect to the seal lip 41 increases gradually in the process. Further, since the opening end part 121 is approximately vertical near the step part 122, it is possible to obtain a fixed collapsing margin even if there is a slight dispersion in the fitting position.

Further, since the compression reaction force of the gasket 4 on the basis of the increase of the collapsing margin causes a bend as shown by the single-dot chain line in the top plate part 21 via the inclined side plate part 22 of the cover 2, and the gasket 4 is pushed to the outer peripheral side on the basis of a bend stress, the fitting force of the base 1 to the side plate part 12 (the opening end part 121) is compensated.

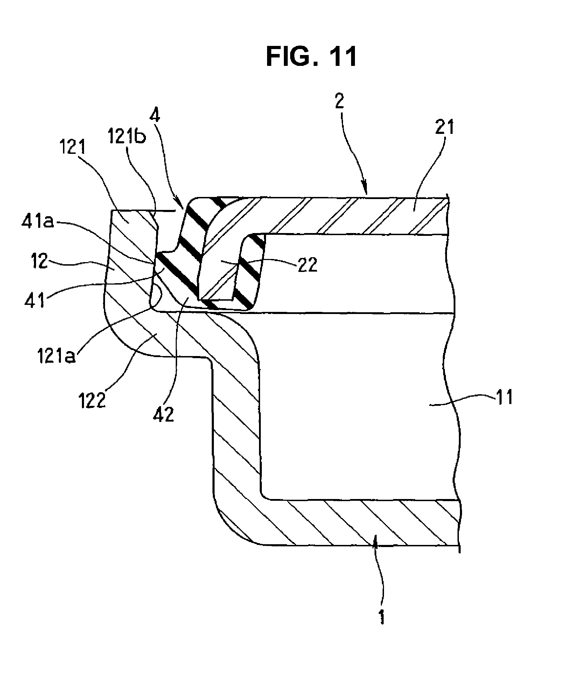

Further, Fig. 11 is a partly cross sectional view showing an example in which the shape of the base is modified in the fourth embodiment. Fig. 11 is the same as Fig. 9 in a basic structure, however, is different from Fig. 9 in a point that the opening end part 121 at the upper side than the step part 122 in the side plate part 12 of the base 1 is inclined slightly to the inner peripheral side.

In accordance with the structure shown in Fig. 11, since the opening end part 121 of the base 1 is inclined slightly to the inner peripheral side, the fastening margin with respect to the seal lip 41 is large at the outer side of the close fitting part with the seal lip 41 of the gasket 4. Therefore, after the side plate part 12 (the opening end part 121) of the base 1 and the side plate part 22 of the cover 2 are once fitted to each other via the gasket 4, a detaching resistance is increased in the gasket 4 due to an increase of the surface pressure applied to the side plate part 12 (the opening end part 121) of the base 1 even if the base 1 and the cover 2 are relatively moved in a detaching direction from each other. Thus, it is possible to reduce a degree at which the connection between the base 1 and the cover 2 depends on the screw members 3, specifically reduce the number of the screw members 3, thereby reducing a parts cost and a work cost at a time of assembling.

Further, since an upper end inner peripheral edge of the side plate part 12 (the opening end part 121) of the base 1 is formed as the chamfered or rounded surface 121b, it is possible to prevent the seal lip 41 of the gasket 4 from being damaged at a time of fitting the cover 2 to the base 1. Further, in accordance with the structure mentioned above, it is possible to easily insert the seal lip 41 from the chamfered or rounded surface 121b to the inner side surface 121a of the side plate part 12 (the opening end part 121) in the process of the fitting.

In this case, it is not necessary that the side plate part 12 (the opening end part 121) of the base 1 is inclined to the inner peripheral side over an entire circumference. For example, in the case that the plan projection shape of the side plate part 12 is formed in the rectangular shape in which the corner parts are rounded as in Fig. 7 described above, only the side peripheral surfaces positioned at two facing sides may be inclined. Further, in the case of a shape shown in Fig. 8, only side peripheral surfaces positioned at two facing sides, or only circular arc-shaped side peripheral surface may be inclined.

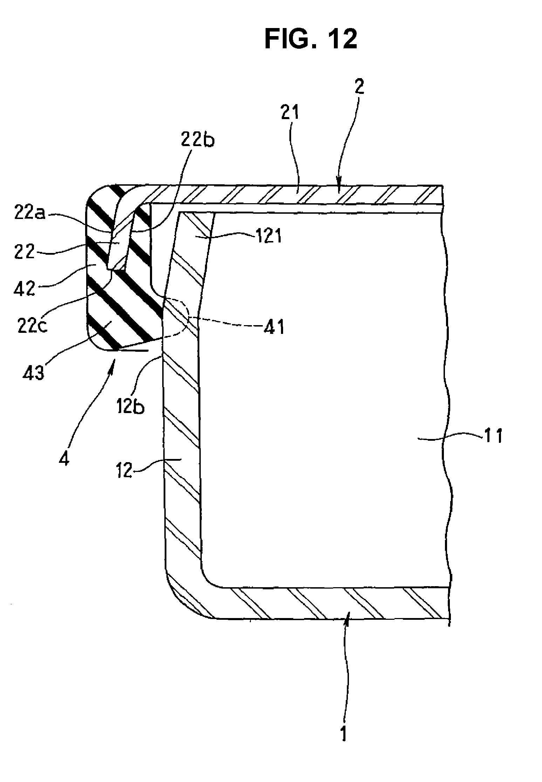

Next, Fig. 12 is a partly cross sectional view showing a fifth embodiment of the sealing structure using the gasket in accordance with the present invention. In this fifth embodiment, the cover 2 is outside fitted to the base 1, in other words, the side plate part 22 of the cover 2 is placed at the outer peripheral side of the side plate part 12 of the base 1, and the inner side surface 22b of the side plate part 22 of the cover 2 and the outer side surface 12b of the side plate part 12 of the base 1 face to each other in a different direction from the connecting direction (a vertical direction in Fig. 12) of the base 1 and the cover 2 by screw members which are not illustrated. In this embodiment, the inner side surface 22b of the side plate part 22 of the cover 2 corresponds to "one side peripheral surface" in the description of the first aspect of the present invention, and the outer side surface 12b of the side plate part 12 of the base 1 corresponds to "other side peripheral surface" in the same description.

The gasket 4 made of the rubber-like elastic material is integrally provided in the side plate part 22 of the cover 2. The gasket 4 is, for example, vulcanized and formed integrally on the side plate part 22 in accordance with the injection molding using the metal mold or the like. In particular, the gasket 4 has the base part 42 adhered to the side plate part 22 so as to enwrap the outer side surface 22a, the leading end part 22c and the inner side surface 22b, an extension part 43 extended from the base part 42 to a side to which the leading end of the side plate part 22 of the cover 2 is directed, and the seal lip 41 formed on an inner peripheral surface of the extension part 43 and brought into close contact with the outer side surface 12b of the side plate part 12 of the base 1 with a desired surface pressure. In this case, a broken line part in the figure indicates a fastening margin of the seal lip 41 with respect to the outer side surface 12b of the side plate part 12 of the base 1.

The side plate part 12 of the base 1 is slightly inclined to an inner side from an upper side of a part with which the seal lip 41 is brought into close contact in an illustrated fitting state, to the opening end part 121. Therefore, it is possible to effectively prevent the seal lip 41 of the gasket 4 from being damaged, and since the fastening margin of the seal lip 41 is increased gradually in the process of the fitting, it is possible to easily fit, at a time of fitting the cover 2 to the base 1.

In the fifth embodiment mentioned above, since the gasket 4 makes sealing between the side plate part 12 of the base 1 and the side plate part 22 of the cover 2, the collapsing margin is not affected by the connecting position, the fastening amount or the like by screw members, and it is possible to prevent the uneven deformation of the cover 2 caused by the repulsion force of the gasket 4, and the partial lack of the surface pressure of the gasket 4 thereby. In other words, it is basically possible to achieve the same effect as the first embodiment described above.

In addition, since the seal lip 41 of the gasket 4 is formed on the extension part 43 which does not have the side plate part 22 of the cover 2 therein, the compression stress of the seal lip 41 caused by the fastening margin shown by the broken line in Fig. 12 is absorbed by a bending deformation of the extension part 43, whereby the gasket 4 becomes soft, and the deforming force with respect to the base 1 and the cover 2 is reduced. Therefore, it is possible to effectively inhibit the base 1 and the cover 2, which is downsized and thinned on the basis of the downsizing of the HDD, from being deformed by the repulsion force of the gasket 4.

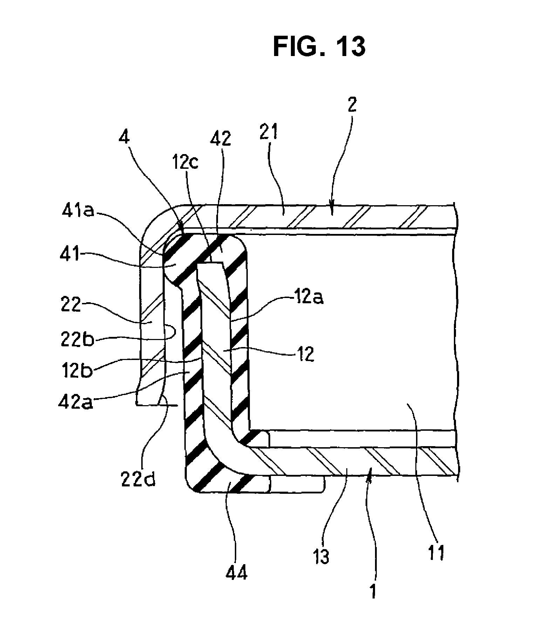

Next, Fig. 13 is a partly cross sectional view showing a sixth embodiment of the sealing structure using the gasket in accordance with the present invention. In this sixth embodiment, the cover 2 is outside fitted to the base 1. In particular, the side plate part 22 of the cover 2 is placed at the outer peripheral side of the side plate part 12 of the base 1, and the inner side surface 22b of the side plate part 22 of the cover 2 and the outer side surface 12b of the side plate part 12 of the base 1 face to each other in a different direction from the connecting direction (a vertical direction in Fig. 13) of the base 1 and the cover 2 by screw members (not illustrated).

The gasket 4 made of the rubber-like elastic material is integrally provided on the side plate part 12 of the base 1. The gasket 4 is, for example, vulcanized and formed integrally on the side plate part 12 in accordance with the injection molding using the metal mold or the like, and the seal lip 41 directed to the outer peripheral side is formed so as to be positioned at the outer periphery of the opening end part (the upper end part) of the side plate part 12, and the base part 42 is adhered to the side plate part 12 so as to enwrap the outer side surface 12b, the leading end part 12c and the inner side surface 12a. Further, the seal lip 41 is structured such that the seal surface 41a at a leading end (an outer peripheral end) is brought into close contact with a position close to the top plate part 21 on the inner side surface 22b of the side plate part 22 of the cover 2 in an illustrated fitting state, with a desired surface pressure.

Since a lower end inner peripheral surface of the side plate part 22 of the cover 2 is formed as a chamfered or rounded surface 22d open to an outer periphery, it is possible to prevent the seal lip 41 of the gasket 4 from being damaged at a time of fitting the cover 2 to the base 1. Further, in accordance with the structure mentioned above, it is possible to easily insert the seal lip 41 from the chamfered or rounded surface 22d to the inner side surface 22b of the side plate part 22 in the process of the fitting.

In the base part 42 of the gasket 4, the part 42a adhered to the outer peripheral side of the side plate part 12 of the base 1 extends to the corner part (the part A in Fig. 7) at the outer periphery of the bottom plate part 13 of the base 12 so as to form a buffering part 44.

In the sixth embodiment mentioned above, since the gasket 4 seals between the side plate part 12 of the base 1 and the side plate part 22 of the cover 2, the collapsing margin is not affected by the connecting position, the fastening amount or the like by the screw members, and it is possible to prevent the uneven deformation of the cover 2 caused by the repulsion force of the gasket 4 and the partial lack of the surface pressure of the gasket 4 thereby. In other words, it is basically possible to achieve the same effect as the first embodiment described above.

In addition, in the gasket 4, the buffering part 44 formed so as to extend to the outer peripheral part of the bottom plate part 13 of the base 1 from the outer peripheral part 42a of the base part 42 achieves a function of reducing an impact applied from the external part. Therefore, it is not necessary to independently provide the buffering member.

Further, since the base part 42 of the gasket 4 is adhered so as to enwrap the side plate part 12 of the base 1, the adhesion area thereof is large, and the buffering part 44 formed so as to extend to the outer peripheral part of the bottom plate part 13 of the base 1 contributes to an increase of the adhesion area. Therefore, even in the case that the gasket 4 itself is inevitably downsized by the downsizing of the HDD, that is, the downsizing of the base 1 and the cover 2, a desired adhesion strength of the gasket 4 can be secured.

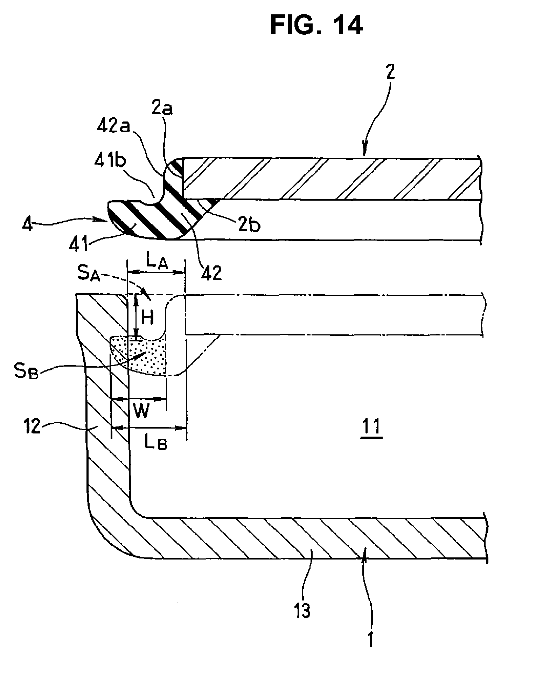

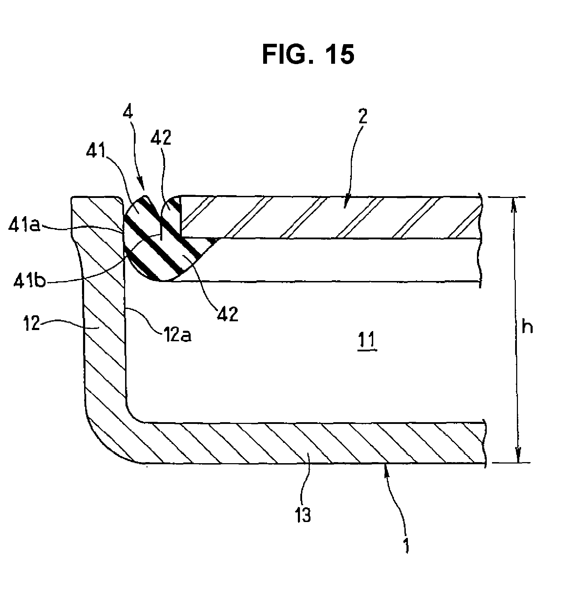

Next, Fig. 14 is a partly cross sectional view showing a seventh embodiment of the sealing structure using the gasket in accordance with the present invention, in a state that the base 1 and the cover 2 are not fitted, and Fig 15 is a partly cross sectional view showing the same in a state that the base 1 and the cover 2 are fitted. In this seventh embodiment, the cover 2 is formed in a flat plate shape without having the side plate part 22 as in each of the embodiments mentioned above, and is inside fitted to the storage part 11 of the base 1. An outer peripheral edge 2a thereof faces to the inner side surface 12a of the side plate part 12 of the base 1 in a direction which is approximately perpendicular to the connecting direction (a vertical direction in Figs. 14 and 15) of the base 1 and the cover 2 by screw members (not illustrated). In this embodiment, the outer peripheral edge 2a of the cover 2 corresponds to "one side peripheral surface" in the description of the first aspect of the present invention, and the inner side surface 12a of the side plate part 12 of the base 1 corresponds to "other side peripheral surface" in the description.

The gasket 4 made of the rubber-like elastic material is integrally provided in an outer peripheral part of the cover 2. The gasket 4 is, for example, vulcanized and formed integrally on the outer peripheral part of the cover 2 in accordance with the injection molding using the metal mold or the like, and is constituted by the base part 42 integrally adhered on the outer peripheral edge 2a of the cover 2 to a lower surface outer peripheral part 2b, and the seal lip 41 extending to an outer peripheral side of the base part 42 so as to form a concave shape at an opposite side (an upper side in the figure) to the storage part 11 of the base 1, as shown in Fig. 14. The seal lip 41 is brought into close contact in a buckling state with the inner side surface 12a of the side plate part 12 of the base 1 extending so as to enwrap the outer peripheral side of the outer peripheral edge 2a of the cover 2, as shown in Fig. 15.

In detail, in the gasket 4, the base part 42 diagonally extends from the adhered part to the outer peripheral edge 2a of the cover 2 and the lower surface outer peripheral part 2b to the outer periphery lower side (the storage part 11 side of the base 1), in the non-fitted state shown in Fig. 14, and the seal lip 41 protrudes in a collar shape to the outer peripheral side therefrom. Further, at the upper surface (the surface in the opposite side to the storage part 11 of the base 1) of the seal lip 41, there is provided circumferentially a rounded groove 41b so as to have an approximately J-shaped cross sectional shape together with the outer peripheral surface of the base part 42.

In this case, if the seal lip 41 is defined as a part at an outer peripheral side than the outer peripheral surface 42a of the base part 42, in the case of projecting the cross sections of the cover 2 and the gasket 4 at the fitted position as shown by a single-dot chain line on the cross section of the base 1, the following relation is established, where $S_A$ is a cross sectional area of a gap between the side plate part 12 of the base 1 and the base part 42 of the projected gasket 4, and $S_B$ is a cross sectional area of the seal lip 41 indicated in the figure by attaching dots.

$$SA \geqq SB \ \dots (1)$$

Further, the following relation is established, where H is a height from a groove bottom of the groove 41b to an upper surface of the cover 2, and W is a protruding width of the seal lip 41 from the base part 42 to the outer peripheral side.

$$H > W \ \dots (2)$$

In this case, "groove bottom of the groove 41b" corresponds to "bottom part of the concave shape" in the description of the ninth aspect of the present invention. Further, the following relation is off course established, where $L_A$ is a dimension between the outer peripheral edge 2a of the cover 2 and the inner side surface 12a of the side plate part 12 of the base 1, and $L_B$ is a protruding length of the gasket 4 from the outer peripheral edge 2a.

$$L_B > L_A \ \dots (3)$$

In accordance with the seventh embodiment, in the process of pushing the cover 2 toward the inner periphery of the side plate part 12 of the base 1 as shown by a single-dot chain line, from the non-fitted state shown by a solid line in Fig. 14, to place it at a position which is flush with the upper end thereof, the gasket 4 is interposed between the inner side surface 12a of the side plate part 12 of the base 1 and the outer peripheral edge 2a of the cover 2, in a state that the seal lip 41 buckles to the outer side with respect to the base part 42 by making the groove 41b as a boundary, as shown in Fig. 15. This is because the seal lip 41 is bent at the groove 41b on the basis of the relation $L_B > L_A$, and an application of friction force with the side plate part 12 of the base 1 to the seal lip 41. Therefore, in comparison with the case that the gasket 104 is interposed in series with respect to the connecting direction of the base 101 and the cover 102 as in Fig. 22 described above, it is possible to reduce the thickness (the height h) of the outer shell of the apparatus formed by the base 1 and the cover 2. Further, this is also effective in the light of the reduction in thickness of the apparatus by reducing the dimension in the thickness direction.

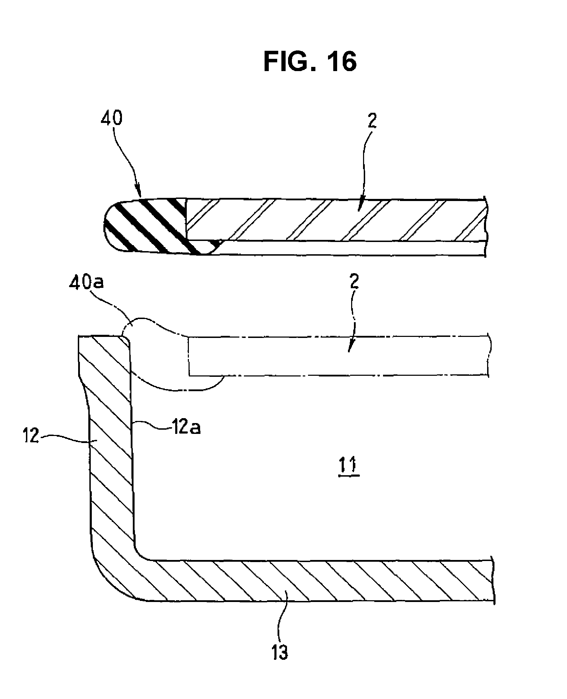

In this case, Fig. 16 is a partly cross sectional view showing a comparative embodiment with respect to the seventh embodiment. A gasket 40 in accordance with the comparative embodiment is structured such as to be compressed between the side plate part 12 of the base 1 and the base part 42 of the gasket 4 so as to effect sealing by being formed in a simple protruding shape protruding from the outer peripheral edge 2a of the cover 2 to the outer peripheral side.

In accordance with this comparative embodiment, since the dispersion of the surface pressure of the gasket 4 caused by the dispersion of a dimensional accuracy of the side plate part 12 of the base 1 is large, and the gasket 4 is deformed to bend by friction with the inner side surface 12a of the side plate part 12 as well as being compressed, a leading end 40a protrudes outside in the process of pushing the cover 2 toward the inner periphery of the side plate part 12 of the base 1 as shown by a one-dot chain line, from the non-attached state shown by a solid line in Fig. 16, to place it at the position which is flush with the upper end thereof. Further, the restoring force of the gasket 4 with respect to the bending deformation acts in the direction of pushing back the cover 2 from the storage part 11 of the base 1 to the outer side.

On the contrary, in accordance with the seventh embodiment, since the gasket 4 is buckled as shown in Fig. 15 in the process of inside fitting the cover 2 to the base 1, the repulsion force is comparatively small. Thus it is possible to easily install the gasket 4 and it is possible to effectively inhibit the downsized and thinned base 1 and cover 2 on the basis of the downsizing of the HDD from being deformed by the repulsion force of the gasket 4. Further, since the seal lip 41 can well follow the dispersion of the dimensional accuracy with respect to the thickness direction of the side plate part 12 of the base 1, and the seal lip 41 is outside directed, it is possible to achieve an excellent sealing performance with respect to external dust.

Further, in the case of opening the base 1 and the cover 2 up and down from the state in Fig. 15, the side plate part 12 of the base 1 is relatively moved downward with respect to the gasket 4. Therefore, the seal lip 41 deforms so as to rise by the friction force with the inner side surface 12a of the side plate part 12, whereby the surface pressure of the seal surface 41a is increased, and the restoring force to the direction of incline of the seal lip 41 is applied in a direction of moving the bottom plate part 13 of the base 1 and the cover 2 close to each other. Therefore, the gasket 4 itself generates the connecting force between the base 1 and the cover 2, resulting in that the parts cost and the working cost at a time of assembling can be reduced, by reduction of a degree at which the connection between the base 1 and the cover 2 depends on the screw members, and reduction of the number of the screw members.

Further, in the case of the dimensional relation which satisfies the expression (1) and/or the expression (2), it is possible to effectively prevent the seal lip 41 from protruding outside from the part between the upper end of the side plate part 12 and the upper surface of the cover 2 due to the compression of the seal lip 41 between the side plate part 12 of the base 1 and the base part 42 of the gasket 4.

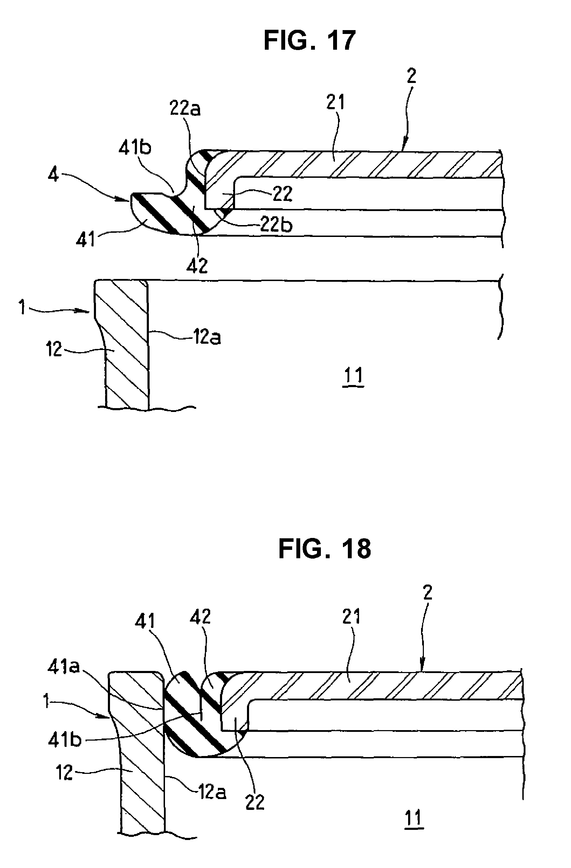

Fig. 17 is a partly cross sectional view showing an example in which the shape of the cover is modified in the seventh embodiment mentioned above, in a state that the base and the cover are not fitted, and Fig. 18 is a partly cross sectional view showing the same in a state that the base and the cover are fitted. The structure in this example is different from Figs. 14 and 15 in a point that the cover 2 is constituted by a top plate part 21, and a side plate part 22 which is formed so as to be bent approximately vertically along an outer peripheral edge of the top plate part 21.

The gasket 4 made of the rubber-like elastic material is constituted by the base part 42 which is integrally adhered on the outer peripheral surface 22a of the side plate part 22 of the cover 2 to the leading end part (the lower end surface) 22c, and the seal lip 41 which extends to the outer peripheral side of the base part 42 in such a manner that the opposite side (the upper side in the figure) to the storage part 11 of the base 1 is formed in a concave shape, as shown in Fig. 17. The seal lip 41 is brought into close contact in a buckled state with the inner side surface 12a of the side plate part 12 of the base 1 extending so as to surround the outer peripheral side of the side plate part 22 of the cover 2, as shown in Fig. 18.

Further, in this example, similarly to Fig. 14 described above, the dimensional relation in accordance with the expression (1) and/or the expression (2), and the expression (3) is preferably applied.

Therefore, in this case, since the gasket 4 has a low repulsion, the cover 2 can be easily installed, the deforming force applied to the base 1 and the cover 2 is small, the sealing performance with respect to the external dust is nevertheless excellent, a degree at which the connection between the base 1 and the cover 2 depends on the screw members can be reduced, and protruding outside of the seal lip 41 from the part between the side plate part 12 of the base 1 and the basepart 42 of the gasket 4 canbe effectivelyprevented.

In this case, in the structure that the base 1 and the cover 2 are made for the HDD, and the outer appearance is formed in the parallelepiped shape as shown in Fig. 7, the sealing performance is improved when each of the corner parts A in the plan projection shape is formed roundly and has a larger radius of curvature, as described above. A description will be given here of the other method for improving the sealing performance in the corner part A.

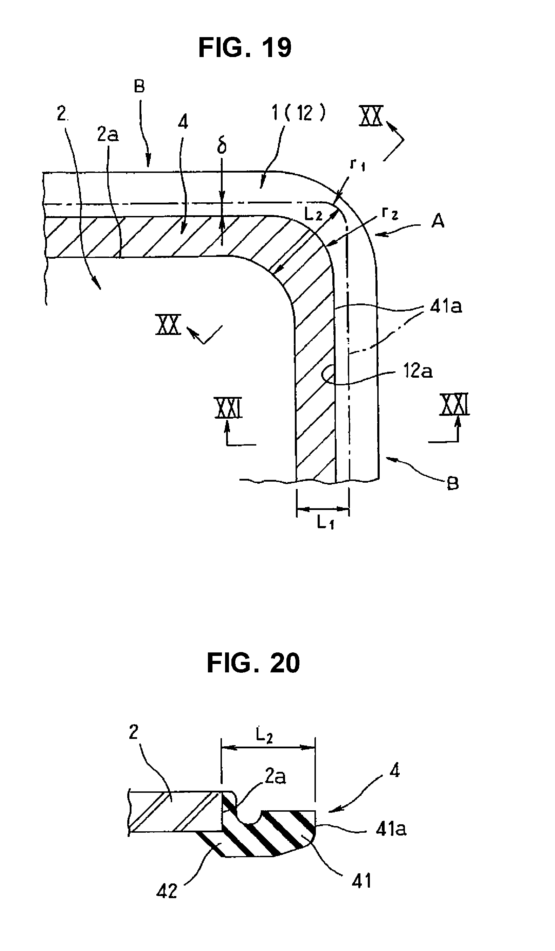

Fig. 19 is a plan view showing the corner parts A of the base 1, the cover 2 and the gasket 4 for explaining the method, Fig. 20 is a cross sectional view obtained by cutting the gasket 4 at a position XX-XX in Fig. 19, and Fig. 21 is a cross sectional view obtained by cutting the gasket 4 at a position XXI-XXI in Fig. 19. In particular, in the example shown in Fig. 19, the inner side surface 12a of the side plate part 12 of the base 1, and the outer peripheral seal surface 41a of the gasket 4 brought into close contact with the inner side surface 12a are formed in a shape obtained by rounding four corner parts (only one corner part is shown in the figure) A of the rectangle in the plan projection shape.

The gasket 4 is basically the same as in Fig. 14 described above. In particular, as shown in Figs. 20 and 21, the gasket 4 is constituted by the base part 42 which is integrally adhered to the outer peripheral part of the cover 2, and the seal lip 41 which extends to the outer peripheral side of the base part 42 so as to form an approximately J-shaped cross section in such a manner that the opposite side to the storage part of the base 1 is formed in the concave shape. The outer peripheral seal surface 41a of the seal lip 41 is brought into close contact in the buckled state with the inner side surface 12a of the side plate part 12 of the base 1 extending so as to surround the outer peripheral side of the outer peripheral edge 2a of the cover 2.

The outer peripheral seal surface 41a of the gasket 4 is structured such that a radius $r_1$ of curvature of the curved surface at each of the corner parts A is smaller than a radius $r_2$ of curvature of the inner side surface 12a of the side plate part 12 of the base 1 at the corner part A, in the non-installed state shown by the single-dot chain line in Fig. 19.

Further, as is apparent from the comparison between Figs. 20 and 21, the gasket 4 is structured such that a protruding length $L_2$ from the outer peripheral edge 2a of the cover 2 at the corner part A is larger than a protruding length $L_1$ at the straight part B (a part corresponding to each of sides of a polygon) corresponding to the other parts than the corner part A.

In accordance with the structure mentioned above, in the structure that the plane projection shapes of the base 1 and the gasket 4 are formed in the polygon having the rounded corner parts A, a collapsing amount δ of the gasket 4 at the corner part A is larger than that in the straight part B. Although the corner part A of the base 1 manufactured in accordance with the press molding is hardly formed with high precision in accordance with the downsizing of the HDD, since the collapsing amount δ of the gasket 4 is made large at the corner part A as mentioned above, it is possible to secure the good sealing performance in the corner part A.

## Industrial Applicability

The present invention is useful, for example, as the sealing structure between the base and the top cover for the HDD.

## Claims

1. A sealing structure using a gasket for sealing a clearance between a base (1) having a storage part (11) and a cover (2) joined to the base (1) so as to close said storage part (11), via a gasket (4) made of a rubber-like elastic material, wherein said base (1) and the cover (2) have side peripheral surfaces facing to each other in a different direction from their joining direction, and said gasket (4) is integrally provided on one side peripheral surface of the side peripheral surface of said base (1) and the side peripheral surface of said cover (2), and is brought into close contact with the other side peripheral surface.

2. A sealing structure using a gasket as claimed in claim 1, wherein the gasket (4) has a seal lip (41) brought into close contact with the other side peripheral surface, and the seal lip (41) is formed in an inclined state toward a relative movement direction of the other side peripheral surface at a time of relatively moving the cover (2) to the storage part (11) side of the base (1).

3. A sealing structure using a gasket as claimed in claim 1, wherein the other side peripheral surface has a larger fastening margin with respect to the gasket (4) at an outer side from a close fitting part to the gasket (4).

4. A sealing structure using a gasket as claimed in claim 1, wherein the fastening margin with respect to the gasket (4) is made gradually larger from an end part of the other side peripheral surface toward the close fitting part with the gasket (4), on the other side peripheral surface.

5. A sealing structure using a gasket as claimed in claim 1, wherein the base (1) and the cover (2) have side plate parts (12, 22) along the outer peripheries thereof, and the gasket (4) is adhered in such a manner as to enwrap one of said side plate parts (12, 22).

6. A sealing structure using a gasket as claimed in claim 1, wherein the base (1) and the cover (2) have side plate parts (12, 22) along the outer peripheries thereof, the gasket (4) is adhered to one of said side plate parts (12, 22), and has an extension part (43) extending toward a side to which a leading end of said one side plate part is directed, and the seal lip (41) brought into close contact with the other side peripheral surface is formed on said extension part (43).

7. A sealing structure using a gasket for sealing a clearance between a base (1) having a storage part (11) and a cover (2) joined to the base (1) so as to close said storage part (11), via a gasket (4) made of a rubber-like elastic material, wherein said base (1) and the cover (2) have side peripheral surfaces facing to each other in a different direction from their joining direction, and said gasket (4) is integrally provided on the side peripheral surface of said base (1) and is brought into close contact with the side peripheral surface of said cover (2), and a buffering part (44) positioned at an outer peripheral part of a bottom plate part (13) of said cover (2) is integrally formed in said gasket (4).

8. A sealing structure using a gasket for sealing a clearance between a base (1) having a storage part (11) and a cover (2) joined to the base (1) so as to close said storage part (11), via a gasket (4) made of a rubber-like elastic material, wherein said gasket (4) is constituted by a base part (42) integrally adhered to a side peripheral surface of said cover (2), and a seal lip (41) extending to an outer peripheral side of the base part (42) in such a manner that an opposite side to said storage part (11) forms a concave shape, and the seal lip (41) is brought into close contact in a buckling state with a side plate part (12) of said base (1) extending in such a manner as to surround the side peripheral surface of said cover (2).

9. A sealing structure using a gasket as claimed in claim 8, wherein one or both of the following two expressions is satisfied:

$$S_A \geqq S_B \quad \ldots (1)$$

$$H > W \quad \ldots (2)$$

in which $S_A$ is a cross sectional area of a clearance between the base part (42) of the gasket (4) and the side plate part (12) of the base (1), $S_B$ is a cross sectional area of the seal lip (41), H is a height from a bottom part of the concave shape of the seal lip (41) to an upper surface of the cover (2), and W is a protruding width of the seal lip (41) from the base part (42) of the gasket (4) to an outer peripheral side.

10. A sealing structure using a gasket for sealing a clearance between a base (1) having a storage part (11) and having a polygonal plane projection shape with rounded corner parts (A), and a cover (2) arranged at an inner side of a side plate part (12) of the base (1) and joined so as to close said storage part (11), via a gasket (4) made of a rubber-like elastic material, integrally bonded to a side peripheral surface of the cover (2) and brought into close contact with an inner side surface (12a) of said side plate part (12), wherein a radius ($r_1$) of curvature of an outer peripheral seal surface (41a) of said gasket (4) at said corner parts (A) is made smaller than a radius ($r_2$) of curvature of an inner side surface (12a) of the side plate part (12) of said base (1) at said corner part (A).

11. A sealing structure using a gasket for sealing a clearance between a base (1) having a storage part (11) and having a polygonal plane projection shape with rounded corner parts (A), and a cover (2) arranged at an inner side of a side plate part (12) of the base (1) and joined so as to close said storage part (11), via a gasket (4) made of a rubber-like elastic material, integrally bonded to a side peripheral surface of the cover (2) and brought into close contact with an inner side surface (12a) of said side plate part (12), wherein a protruding length ($L_2$) of the gasket (4) at said corner parts (A) is made larger than a protruding length ($L_1$) of the gasket (4) at the other parts than said corner part (A).

## FIG. 1

## FIG. 2

# FIG. 3

# FIG. 4

## FIG. 5

## FIG. 6

## FIG. 7

## FIG. 8

# FIG. 9

# FIG. 10

# FIG. 11

# FIG. 12

## FIG. 13

# FIG. 14

# FIG. 15

# FIG. 16

# FIG. 17

# FIG. 18

# FIG. 19

# FIG. 20

# FIG. 21

# FIG. 22

# FIG. 23

<table>
<tr><td colspan="2">**INTERNATIONAL SEARCH REPORT**</td><td>International application No.<br>PCT/JP2006/302128</td></tr>
</table>

**A. CLASSIFICATION OF SUBJECT MATTER**
*F16J15/10*(2006.01)

According to International Patent Classification (IPC) or to both national classification and IPC

**B. FIELDS SEARCHED**

Minimum documentation searched (classification system followed by classification symbols)
*F16J15/10*(2006.01)

Documentation searched other than minimum documentation to the extent that such documents are included in the fields searched

Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 35-1586 B1   (Nihon Senshoku Kikai Kabushiki Kaisha),<br>01 March, 1960 (01.03.60),<br>Full text; Figs. 1 to 3<br>(Family: none) | 1<br>2-6,8,9 |
| Y | JP 2002-71023 A  (Nishikawa Rubber Co., Ltd.),<br>08 March, 2002 (08.03.02),<br>Full text; Figs. 1 to 9<br>(Family: none) | 2-4 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    26 April, 2006 (26.04.06) | Date of mailing of the international search report<br>    16 May, 2006 (16.05.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/302128

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 123790/1989(Laid-open No. 62265/1991)<br>(NOK Kabushiki Kaisha),<br>18 June, 1991 (18.06.91),<br>Full text; Figs. 1 to 8<br>(Family: none) | 3 |
| Y | Microfilm of the specification and drawings annexed to the request of Japanese Utility Model Application No. 169296/1983(Laid-open No. 80142/1985)<br>(Fuji Gureto Kogyo Kabushiki Kaisha),<br>04 June, 1985 (04.06.85),<br>Full text; Figs. 1 to 4<br>(Family: none) | 4,7,9 |
| Y | JP 2002-75141 A (Energy Support Co., Ltd.),<br>15 March, 2002 (15.03.02),<br>Full text; Figs. 1 to 9<br>(Family: none) | 5,6 |
| Y | JP 2002-240786 A (Honda Motor Co., Ltd.),<br>28 August, 2002 (28.08.02),<br>Full text; Figs. 1, 2<br>& US 6699083 B2<br>full text; Figs. 1, 2 | 7 |
| Y | Microfilm of the specification and drawings annexed to the request of Japanese Utility Model Application No. 107999/1989(Laid-open No. 48162/1991)<br>(NOK Kabushiki Kaisha),<br>08 May, 1991 (08.05.91),<br>Full text; Figs. 1 to 6<br>(Family: none) | 8 |

Form PCT/ISA/210 (continuation of second sheet) (April 2005)

**EP 1 850 039 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004036630 A